(19) Europäisches Patentamt
European Patent Office
Office européen des brevets

(11) **EP 3 511 787 A1**

(12) **EUROPEAN PATENT APPLICATION**

(43) Date of publication:
**17.07.2019 Bulletin 2019/29**

(51) Int Cl.:
***G05B 19/406*** (2006.01)

(21) Application number: **18151446.4**

(22) Date of filing: **12.01.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(71) Applicant: **Siemens Aktiengesellschaft
80333 München (DE)**

(72) Inventors:
• **Roshchin, Mikhail
81925 München (DE)**
• **Batsiukov, Kiryl
81379 München (DE)**
• **Fishkin, Alexey
81827 München (DE)**

(54) **INDUSTRIAL PROCESS DATA PROCESSING**

(57) Present invention concerns a method and a system for processing data related to an industrial process. The method comprises steps of acquiring a parameter related to the industrial process, the parameter being indicative of an operational state of a machine that is involved in the industrial process, wherein the operational state is indicative of whether or not the machine is running at a corresponding time; of storing the operational state of the machine at the corresponding time; and of providing a key performance indicator of the machine over a predetermined period of time on the basis of a plurality of stored operational states.

FIG 3

**Description**

Present invention concerns the processing of data acquired from an industrial process. More specifically present invention concerns providing meta information on machinery used to carry out said process.

Background of the Invention

An industrial application comprises a machine performing a predetermined task. The machine may for instance be relatively simple like an electric motor, a valve or an electric magnet. In a more complex example, the machine may comprise an injection moulding press, an industrial robot or a bottling plant. The machine may be composed of an arrangement of other machines and several machines may work together to form a system. In order to control the operation of the overall machine or system it is often necessary to control several of its parts. This may be true for machine operation as well as for securing machine availability. To this ends, machine data related to the process may be collected and processed.

An industrial machine may be equipped with one or more contraptions that pick up at least one operational parameter regularly or on an event driven basis. The acquired data may be stored for a predetermined time and processing may take place on stored data. The number of data points taken on an industrial machine has increased lately and may exceed 200 even for a simpler machine like an electric motor, wherein each point represents one operation- or environment-related parameter of the motor. Given a good understanding of the machine, the acquired data may permit determination of complex parameters like a remaining machine life time.

The data picked up from more than one industrial machine may be put to more use through combined data analysis. By comparing performance of machines of similar or the same type employed for different purposes or in different environments, machine stress and component wear out may be analysed. Production data of one machine may be related to that of a different machine on the same plant. Complex and high level data analysis may lead to completely new insights and perspectives.

While for some machinery like gas turbines standard methods for determining key performance factors (KPI) exist, which allow the observation and planning of machine downtimes, most machinery used in industrial processes are not monitored correspondingly.

It is an objective of present invention to provide key performance factor generation for machinery used for a industrial process. The invention solves the given objective through the subject matter defined in independent claims. Preferred embodiments are given in dependent claims.

Disclosure of the Invention

Present invention concerns a method and a system for processing data related to an industrial process. The method comprises steps of acquiring a parameter related to the industrial process, the parameter being indicative of an operational state of a machine that is involved in the industrial process, wherein the operational state is indicative of whether or not the machine is running at a corresponding time; of storing the operational state of the machine at the corresponding time; and of providing a key performance indicator of the machine over a predetermined period of time.

Additional data sources may be considered when the performance indicator is determined. Especially calendar information on scheduled outage, maintenance, replacement or test may influence how up-times or down-times are assessed. Depending on availability of data sources, e.g., sensor data, control events and maintenance calendar entries, a specific computational procedure can be applied. Procedures may work for both the off-line batch analysis and the on-line analysis of new data.

The key performance indicator may enable industrial procurement by monitoring reliability, availability and maintainability; conditions monitoring by continually determining operating characteristics; alarm and inferred events management; risk assessments; diagnostics applications and root-cause analysis or condition-based maintenance.

The key performance indicator may be provided in response to a corresponding request. The request may indicate the sought indicator, a corresponding period of time and/or side conditions for determination of the indicator, like temporal resolution. Accepting an indicator request as well as providing the indicator may be part of a predetermined interface, especially a data and/or control interface between computer processes or applications. Such an interface may also be called application program interface (API). Request and response formats may be well defined and are preferred to be published openly, such as to allow for easy development and use of above-mentioned successive processing.

The operational state of the machine may be determined on the basis of a plurality of acquired parameters. For this, time-related operational state information may be stored synchronously or asynchronously. In another embodiment of the invention, stored data relating to machine action or performance may be analysed such as to determine its operational state for a past period of time. In other words the operational state of the machine may be determined upon availability of data on the machine or the data may be stored and the machine's operational state may be determined retroactively. This may be helpful where several machines sharing certain data participate in the industrial process. For example, two machines in successive positions on a production line may both operate or both stand still. Retrospective determination may allow for storing less data and avoiding preventive processing.

The key performance indicator may be determined on the basis of a plurality of acquired parameters of machine data. This may allow for providing pinpoint KPI for a specific machine, a machine part or even a machine component without first raising corresponding data. A first machine may for instance be determined to be running if a second machine feeding the first one and a third one being fed by the first one are both running. Many heuristics may be applied on present data to determine KPI. The heuristic does not need to be present at the time of storing machine data but can be developed later on.

In some cases the employed parameters may not permit unambiguous determination of the operational state of a given machine, section or component and the operational state may be determined only with a certain degree of confidence. Often-times such operational states are acceptable for determination of KPIs, provided that the confidence exceeds a predetermined level.

The key performance indicator may comprise the number of period hours (PH) the machine was running within the predetermined period of time. The period hours reflect the number of hours under consideration, i.e. how many hours are in the predetermined period of time. For this and for other parameters a temporal unit of hours is common; however, other units like minutes, seconds, days, weeks, months, years or any convenient custom unit may also be used. Naming of parameters may reflect the used unit of time, e.g. the key performance indicator might comprise period minutes (PM), wherein 60 PM = 1 PH.

The key performance indicator may comprise the number of service hours (SH) the machine was running within the predetermined period of time. The service hours reflect the total time the machine was operational within the given period of time.

The key performance indicator may comprise the number of reserve shutdown hours (RSH) of the machine within the predetermined period of time. The reserve shutdown time reflect the time the machine was operational but demand for its operation was lacking so the machine was disconnected from its load or shut down.

The key performance indicator may comprise the number of forced outage hours (FOH) of the machine within the predetermined period of time. The forced outage reflect the time the machine was unable to perform as desired.

The key performance indicator may comprise the number of planned outage hours (POH) of the machine within the predetermined period of time. The planned outage hours reflect the time the machine was not scheduled for operation (and did not operate) due to maintenance of the machine itself or another contraption related to the machine.

The key performance indicator may comprise an availability factor (AF) of the machine within the predetermined period of time. The availability factor is generally determined as the available hours divided by the period hours. The available hours reflect the time the machine was available for operation (and did operate).

The key performance indicator may comprise a reliability factor (RF) of the machine within the predetermined period of time. The reliability factor reflect the probability that the machine will not be in a forced outage condition.

The key performance indicator may comprise a service factor (SF) for the machine within the predetermined period of time. The service factor reflect the probability that the machine will be in an operating condition.

The key performance indicator may comprise a mean time between failures (MTBF) of the machine within the predetermined period of time. The mean time between failures reflect the predicted elapsed time between inherent failures of the machine during normal system operation.

The process may be controlled on the basis of the KPI. A controlling method may use pre-processed data instead of raw data, wherein the controlling method may follow any desired practice.

A system for processing data concerning an industrial process comprises a computing platform, the computing platform having a data interface that is connectable, via a wide area data network, to a physical entity which may especially comprise a machine that is related to the industrial process. In this, the physical entity is adapted to provide an acquisition of a parameter that is related to said process and the platform is adapted to carry out a method disclosed herein. The system may thus be used to monitor one or more key performance indicators for one or several machines that are related to the given industrial process. The process may thus be controlled better; especially the planning of down times of machines may be eased or improved. Advantages or features of the method may apply to the method and vice versa.

The invention is intended to be used in the context of industrial processes that are monitored, controlled or networked with methods commonly subsumed as "Industry 4.0". That is, process related data may be acquired wherever a part of the process is executed and acquired information may be sent to a centralized service that stores and/or processes the data. Centralized processing allows improved scaling of hardware and processing of information coming from distributed sources. A comprehensive view on the industrial process in question may more easily be gained.

In the system, the physical entity may comprise a data acquisition unit located in a domain where the process is carried out, the data acquisition unit comprising at least one interface connectable to a sensor that is adapted to acquire said parameter. The data acquisition unit may help to collect and provide information relevant for said process.

Brief Summary of the Enclosed Figures

The above-described properties, features and advantages of present invention as well as the way they are achieved will be made clearer and better understandable in the light of the following discussion, making reference to exemplary embodiments shown in accompanying Figures, in which

Figure 1    shows data processing for one or more industrial systems;
Figure 2    shows a flow chart of an exemplary method for processing data of an industrial process;
Figure 3    shows an exemplary system of key performance indicators; and
Figure 4    shows an exemplary diagram of KPI determination.

Detailed Exemplary Embodiments of the Invention

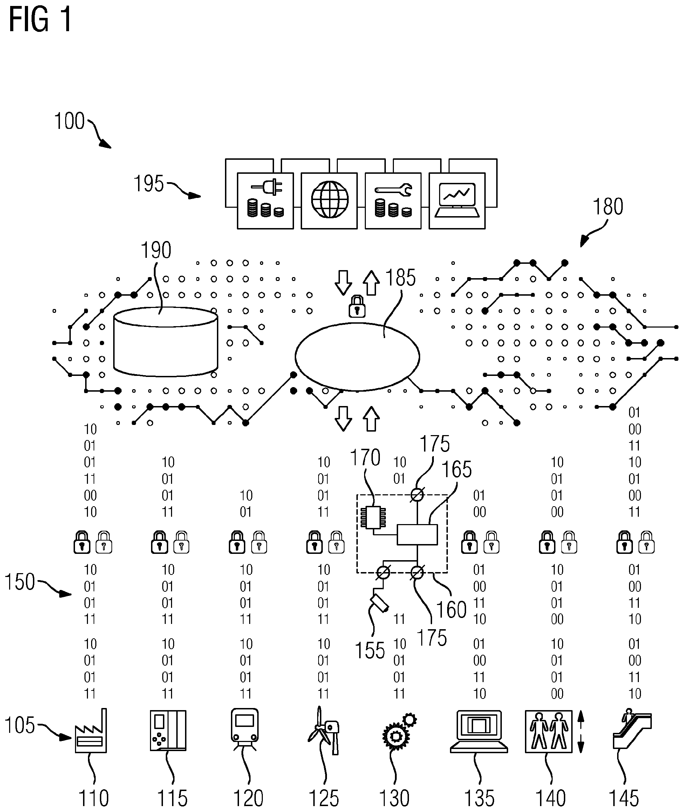

Figure 1 shows a system 100 for data processing for one or more industrial processes 105. Exemplary industrial processes 105 shown in the bottom section of Figure 1 include industrial processing 110, building technology 115, mobility 120, wind power 125, industrial drives 130, health care applications 135, an elevator 140 and an escalator 145. More possible processes 105 include smart city applications, energy management or digital factory. The given selection of industry processes 105 is exemplary and non-limiting. Also, process 105 classification is paradigmatic and a given industrial process 105 may comprise elements of more than one of the given processes 105.

Complexity of a process 105 and deviation of the process 105 from a general approach may differ greatly in different fields. While for instance variance between any two given escalator 145 processes may be limited, process variance in industrial processing 110 may be very high and depend on an object that is to be processed or manufactured. For managing the process 105, high level functionality like determination of expected machinery lifetime, cost factor estimation or supply chain management may require a data model for the process 105 or a class of services 105 the service 105 at hand is part of.

Each process 105 yields data 150 that describes the operation of a technical contraption like a machine, a system, a plant or a production system. Such data may comprise an item count, a speed of movement, acceleration, a temperature, a pressure, a force or torque, a current, a voltage, a distance or any other parameter that is related to the process 105 at hand. Some of the data 150 may already be available in the process 105 in digital form, for instance an ambient temperature that is measured by a different system or a rotational speed requirement. Other data 150 may be sampled with the help of a dedicated sensor 155 and/or a sampling unit 160. The sampling unit 160 may comprise a computational unit 165, local memory 170 and/or interfaces 175 to the contraption at hand, the sensor 155 or a remote data processing entity 180. It is preferred that the machine and/or the sampling unit 165 is adapted to exchange data 150 with the remote data processing entity 180 in encrypted form.

The sampling unit 160 may comprise a microcomputer or microcontroller adapted for digital data processing, especially in the form of the computational unit 165. A method for data processing disclosed herein may be available in form of a computer program product with program code means and the sampling unit 160 may be adapted to implement said method or a part of it by executing the program code means. The computer program product may be stored on a computer readable medium or be transferrable from one system to another by means of a wireless or wire bound data connection.

The processing entity 180 is preferred to implement a service 185 on any desired hardware, especially abstracted from the hardware as a cloud based service 185. This way, the physical location the service 185 is executed at and the physical resources allocated for the service 185 may vary transparently. This may allow for improved resource scaling or location based servicing. The processing entity 180 may comprise a computational unit 165 and/or other elements discussed above with respect to sampling unit 160.

In one preferred option, the service 185 is part of a data processing environment that provides certain functionality for data 150 acquisition, storage, processing or provisioning. A preferred processing environment is known under the name MindSphere. The processing environment may run on top of a cloud service such as AWS (Amazon Web Services) or any other data processing platform.

The service 185 is preferred to have available a storage 190 like a database or a computer file system, especially for data 150. The storage 190 may be implemented on any desired hardware, including semiconductor memory or rotating media magnetic data storage. The storage 190 may itself be implemented as a service, especially a cloud based service, so that from the service's 185 point of view physical constraints or features of the implementation of the storage 190 like maximum capacity or physical location of data holding medium are of no concern and may not even be available. The data 150 is generally time-related in that the reading of a parameter has an associated time which may comprise a date and/or a time. A series of data 150 points over time may form a data series. Information in the storage 190 may be processed, compressed, swapped or dropped after it has been held for longer than a predetermined time or when an available amount of information exceeds a predetermined threshold.

It is proposed to provide the service 185 such that a higher level process 195 may request data 150 and the process 195 returns the requested data 150 in processed or pre-processed form. Request and/or response may be encrypted and/or authenticated. Processing of data 150 may take place after the actual request or at an earlier time after the data 150 is made available. Processed or partly processed data 150 may be stored in storage 190. Data 150 is called raw when it is unaltered from the form it is received from a machine, process 105 or unit 160 by the service 185. Data 150 is called pre-processed after it is made better processable without changing its meaning or context. Pre-processing may for instance identify or remove outliers, mark or fill data gaps, identify or compensate measurement noise or bias. Pre-processing may perform statistical operations on the raw data 150. Data 150 is called processed after several parameters have been combined, deeper statistical analysis has been performed or an altogether new parameter is provided on the basis of existing raw or pre-processed data 150.

The service 185 is preferred to provide pre-processed data on a process 105 to a higher level process 195 via an application program interface (API). Raw and/or processed data 150 may also be made available. The higher level process 195 may not need to worry about basic data processing like data smoothing, outlier detection, noise reduction or key factor determination.

It is proposed that the processing offered by the service 185 will generally be on an abstraction layer that is higher than data sampling and relaying but lower than modelling the underlying industrial process 105. It is especially preferred that the process 195 makes sense of the data 150 in context with a given process 105, while pre-processing or processing of service 185 may be targeted at the data 150 itself, not paying heed to what meaning it carries inside the process 105. Processing of the process 195 may comprise any desired numerical, symbolic or other processing. In one option, the process 195 is designed to provide a visualisation of the data 150, especially for human reception.

In one figurative example an industrial process 105 at hand comprises the fabrication of wooden planks out of timber with a lumber mill with an oscillating saw. Raw data 150 may comprise an oscillation frequency of the saw, the length of wood that has been cut since the last sharpening of the saw blade and the amount of wood that needs to be cut until a predetermined date. The raw data 150 may be pre-processed to be for instance noise-reduced, smoothed or checked to lie within a predetermined range. The data 150 may be further processed to yield a key performance indicator like the lumber mill utilization in per cent. Other processing may comprise trend prediction, calculation of an indirect signal or anomaly detection.

The data 150 provided to the higher level process 195 may form an improved basis on which said process 195 may control the process 105, react on a predetermined condition, relate the process 105 to another process 105 or use external data to gain improved insight or control over the process 105. Such processing generally requires knowledge on the process 105 and its implications and is often done using a mathematical model for said process 105.

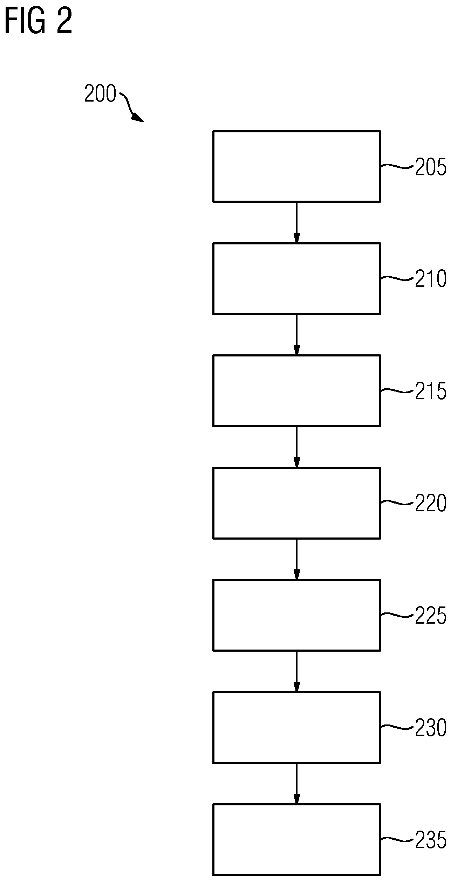

Figure 2 shows a flow chart of a method 200 for processing data concerning an industrial process 105. The method 200 is preferred to be adapted to run on a system 100 of the kind that is described with reference to Figure 1.

In a step 205, a parameter of a machine involved in the industrial process 105 may be acquired. Acquisition is generally the action of determining and/or providing an information or data 150, which is also called acquisition herein. The data 150 is preferred to comprise the value of a parameter, for instance a numerical value corresponding to a predetermined unit (like meters), expressing for example a distance. An indication of the time corresponding to the data 150, like the sampling time, may be processed alongside the acquired data 150.

Acquisition may comprise retrieving digital or analog data 150 that is available in the machine connected to the process 105 or a device controlling the process 105. The industrial process 105 may comprise manufacturing a product on a manufacturing line and acquiring may for example comprise requesting a machine parameter from a production line controller controlling at least one machine on the line and evaluating a response. Acquiring may also comprise taking a measurement through use of a sensor 155. The sensor 155 may for instance be adapted to measure an angle, a length, a count, a position, a movement, a speed, an acceleration, a current, a voltage, a power, a force, an age or any other kind of measurable data 150. The measured parameters are preferred to stand in context with the process 105 and may for instance be part of a machine status or a processing status of an object that is being treated or manufactured. Acquisition may also comprise reading data 150 from a repository such as a storage 190 or a log file.

Acquisition may be triggered by polling, i.e. an external acquisition request, by an event, e.g. the change of a signal or parameter related to the process 105, or based on time, e.g. after a predetermined time since the last acquisition. It is preferred that a plurality of acquisitions may take place simultaneously or in small enough a period of time that temporal correlation between the acquisitions exists. Acquired data 150 may be pre-processed locally by a processing unit that is located in the domain of the process 105, like the sampling unit 160, but it is preferred that raw data 150 is passed from step 205 and pre-processing takes place at a later step of method 200 and possibly in a different physical location, like the processing entity 180. Data 150 is preferred to be formatted in JavaScript Object Notation (JSON).

In a step 210 the data 150 is preferred to be encrypted and may then be sent to the processing entity 180. Physical location of the processing entity 180 may be dynamic and transparent to external processes so that transfer of the data 150 may require a dynamic routing protocol. In a step 215 the transferred data may be received by the processing entity 180 and decrypted if necessary.

In one embodiment of present invention, the received data 150 is processed in order to determine an operational status of a machine connected to the process 105 and the received data 150. In this case the determined information may be stored for later processing in a storage 190 that is available to the processing entity 180 and to the service 185 running on top of it. The received data 150 may also be stored in the storage 190. For storing and processing, data 150 from different processes 105 is preferred to be kept separate, for instance in different database tables and preferably with appropriate access control in place. The storage 190 may be multi-tier in that it comprises several stages of memory that vary in access time and capacity. Fresh data 150 is generally stored in fast but small memory (e.g. RAM) and older data 150 may eventually get relocated into the next slower and larger memory (e.g. a rotating magnetic medium memory, a rotating optical medium or a streaming medium like a magnetic tape).

In an optional step 225 a request for data 150 is received. The request may especially come from a process 195 that is adapted to further process the requested data 150. The request may comprise an indication of a predetermined process 105, an identification of the machine of interest, a period of time, one or more parameters and/or one or more conditions. It is preferred that a step 230 is then executed in order to determine the desired information on the basis of stored data 150. Operational status for a predetermined period of time may then be retrieved from the storage 190 and one or more KPI may be calculated.

In one variant the storage 190 contains operational status information for the machine and the PKI may readily be computed. In another variant the operational status may have to be determined on the basis of other machine data 150. This may have taken place before step 220, in which the data 150 was stored, at a time after the need for determining a KPI arises or at some time in between. For instance, a periodically running application may determine service status for different machines of the process 105 on the basis of data 150 stored in the storage 190. Operation of such an application may be controlled through the process 195.

In an optional step 235 a response to the request of 225 is prepared and provided. The response may comprise the estemated parameter of data 150 and optionally additional information. The requesting process 195 may then latch onto the provided data 150 and process it further. A result of said processing may be used to control the process 105.

It is preferred that between the process 195 and the process 185 an API is defined that allows exchange of data 150 including key performance indicators and optionally information controlling the determination of KPI or machine status information that forms the basis for KPI generation. The API is preferred to follow the Representational State Transfer (REST) paradigm. Although REST strictly does not use session states a token may be used for service access after authentication, which may be based on predetermined credentials. The token may be provided to process 195 by service 185 upon successful authentication. Subsequent requests of the process 195 may require the token to be sent to the service 185 in order to gain access to predetermined service resources like a service function or data 150. The server 185 may maintain session variables associated to the token. The token may also contain information in plain, scrambled, hashed or encrypted form. The service 185 may especially be realized as a web service and the process 195 may communicate with it over an application protocol like Hypertext Transfer Protocol (HTTP) or its encrypted variant HTTPS. Exchanged data 150 may be encoded in JSON.

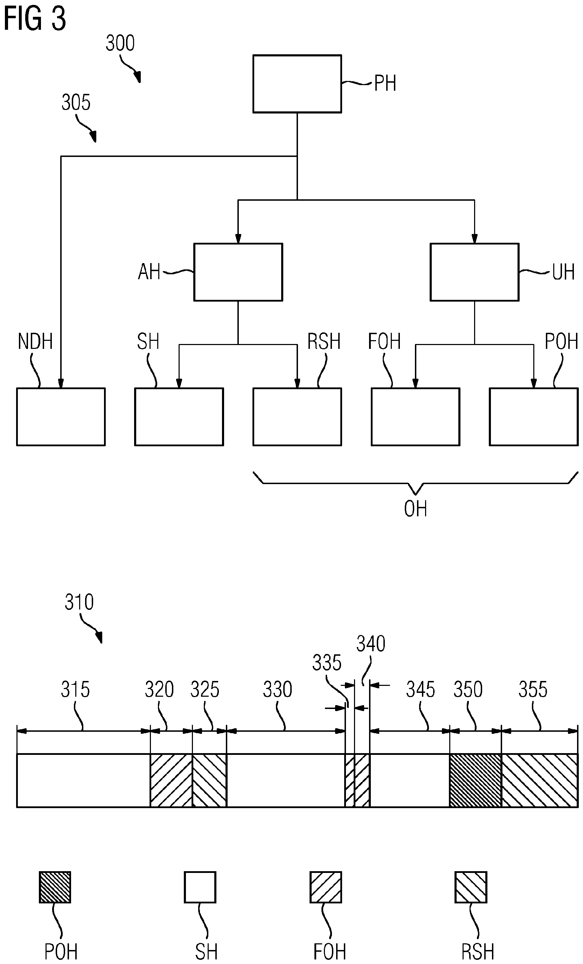

Figure 3 shows an exemplary system 300 of key performance indicators. In an upper section of Figure 3 a tree 305 reflecting the used indicators is given and in a lower section an example timeline 310 for operation times of a machine is shown.

In the tree 305 the following relationships hold:

PH:= the time period under consideration. This period is generally longer than the unit of time used as resolution (hours in the given examples) and may extend to a very long timespan, sometimes the expected or observed lifetime of the machine.

NDH:= no data hours. The amount of time inside the PH for which the operational state of the machine is not known due to a partial or complete lack of data.

AH:= available hours. The time inside the PH in which the machine was available for performing tasks.

UH:= unavailability hours. The time inside the PH in which the machine was unavailable for performing tasks.

The sum of NDH, AH and UH equals the PH. Both the AH and the UAH may be further div diversified.

SH:= service hours. Time inside AH in which the machine is available and in service, i.e. it performs the task it is dedicated to.

RSH:= reserve service hours. Time inside AH in which the machine is available and not in service (by default).

FOH:= forced outage hours. Time inside UAH in which the machine is unavailable and the reason for this was e.g. automated stop triggered by a control system due to some failures or negative indications based on some sensor values.

(continued)

| | |
|---|---|
| POH:= | planned outage hours. Time inside UH in which the machine is unavailable and in a planned outage (by calendar). |
| OH:= | outage hours. Equals to the sum of RSH, FOH and POH. |

Based on these absolute indicators, relative indicators may be determined:

AF:=      availability factor, reflecting the probability that the machine will be usable.

$$\mathtt{AF = [AH/PH] * 100\%}$$

UF:=      unavailability factor, reflecting the probability that the machine will be unusable.

$$\mathtt{UF = [UH/PH] * 100\%}$$

RF:=      reliability factor, reflecting the probability that the machine will not be in a forced outage condition.

$$\mathtt{RF = [(PH-FOH)/PH] * 100\%}$$

SF:=      service factor, reflecting the probability that the machine will be in an operating condition.

$$\mathtt{SF = [SH/PH] * 100\%}$$

FOF:=      force outage factor, reflecting the probability that the machine will be in a forced outage condition.

$$\mathtt{FOF = [FOH/PH] * 100\%}$$

The timeline 310 illustrates a part of the lifetime of an exemplary machine in the terms used above. During a first period 315 the machine is running and the time is counted as SH. The a problem occurs, the machine is taken off service during a second period 320 and the time is counted as FOH. After the problem has been fixed, during a third period 325 the machine cannot run due to other reasons, for instance a secondary damage on a different machine. This time is counted as RSH. During a successive period 330 the machine is running again and the time is counted as SH.

At the beginning of a period 335 the machine is manually shut down and the time is counted as FOH. After that, in a period 340, several attempts to start the machine fail and the time is counted as FOH. With the machine running again, a successive period 345 is counted as SH. After that the machine is planned to be taken off service, for instance for overhaul or maintenance. A corresponding period 350 is counted as POH, even though it may comprise a test start-up. In a successive period 355 the machine is available but not in use and the time is counted as RSH.

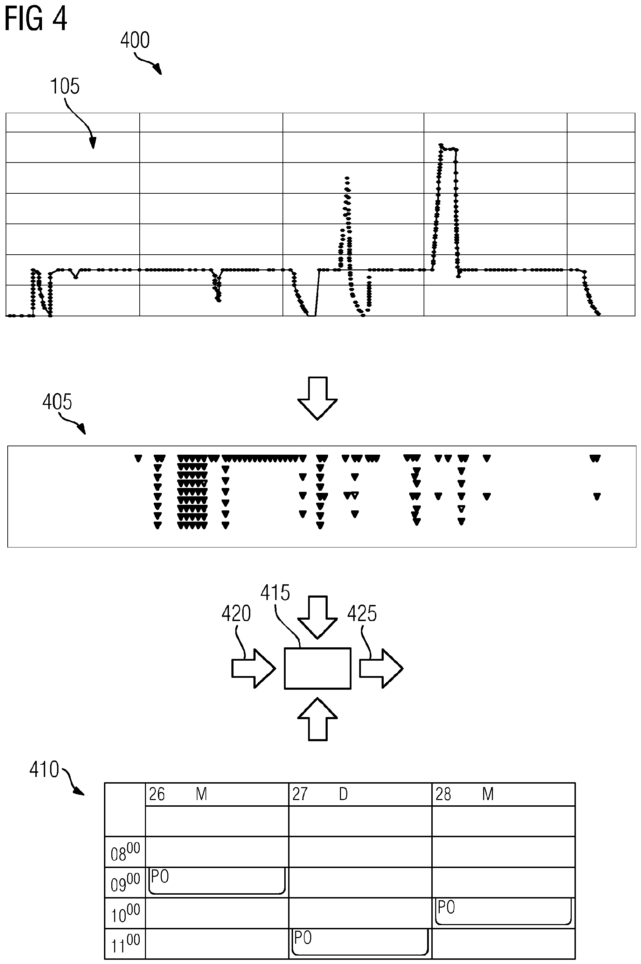

Figure 4 shows an exemplary diagram 400 of KPI determination that may be carried out as part of method 200. Time series data 150 concerning a machine which is related to a predetermined process 105 may form the basis for determination of the machine's operational status 405 over time. In present example the data 150 may relate to the machine's output, for instance in generated electricity of the machine comprises an electric generator. From this, the operational status 405 of the complete machine, a machine subsystem or a machine component may be derived. As shown, one series of data 150 may lead to several operational status 405 of different items; in other embodiments the opposite may be true and from several time series of process 105 related data 150 only one time-related status 405 may be derived. Both concepts can be mixed so that m series of data 150 may permit determination of n status 405. In another embodiment the status 405 of the machine of interest may be determined on the machine side, that is, either by the machine itself, its controller or a monitoring entity like the sampling unit 160. In this case data 150 may not be required for KPI determination.

In one embodiment of present invention, machine status is determined on incoming data 150 by the service 185. Such data 150 may be parameterized with one or more of the following information:

| | |
|---|---|
| period: | the time period in question, preferred to be given as start date/time and end date/time |
| sensor value: | timestamp, numerical sensor value, measured unit |
| service threshold: | the threshold that must be exceeded by the sensor value in order to consider the machine as in service |
| initial state: | the state in which the machine was at the beginning of the period, e.g. SH, RSH, FOH or POH |
| calendar: | <PO-Start-Timestamp, PO-End-Timestamp> |

From the data 150, events may be generated that may indicate a change of status of the machine. Such an event may comprise one or more of the following information:

| timestamp: | a point in time when the event took place, preferred to be given as date/time |
| event id: | a unique identifier for the event. Exemplary events may include a shutdown event when the machine was removed from service (ShutDown), a normal stop when the machine was intentionally stopped (NormalStop), a start attempt, a service start, a reserve shutdown start, a forced internal outage start or a start failure |
| correlation thresh. | as it is not in SH, check for ShutDown and NormalStop events. Then, select FOH or RSH. Default state is preferred to be RSH, may also be FOH |

Generation 415 of KPI may take place in response to a request 420 and may involve providing a response 425. The request 420 is preferred to be parameterised with one or more of the following:

| period: | the time period in question, preferred to be given as start date/time and end date/time |
| id: | an identification of the machine in question |
| KPI: | the KPI of interest. These may include absolute KPI like PH, SH, RSH, POH, FOH or factor KPI like AF, UF, RF, SF, FOF. One or several KPI may be selectable. |

A calendar 410 may be used as an additional source of information. The calendar 410 may hold information on scheduled outage of machines related to the service 105 and reasons for the outages. Different causes may include maintenance, replacement or testing. The calendar 410 is preferred to be implemented electronically such as to permit integration with the service 185. Information may be fed manually into the calendar 410 or through an automated service.

Generation 415 of the KPI will make use of the operation status information, which may have to be determined from a list of events like the ones given exemplarily above. Generation 415 may start from a default state, that is, the status that the machine is assumed to occupy at the beginning of the period of time. The default state may be predetermined, given in the request 420 or be retrieved from another source. The default state may be RSH, in other embodiments it may also be FOH.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

**Claims**

1. Method (200) for processing data (150) concerning an industrial process, the method (200) comprising steps of:

   - acquiring (205) a parameter related to the industrial process (105);
   - the parameter being indicative of an operational state (405) of a machine that is involved in the industrial process (105);
   - wherein the operational state (405) is indicative of whether or not the machine is running at a corresponding time;
   - storing the operational state (405) of the machine at the corresponding time; and
   - providing (230, 235) a key performance indicator of the machine over a predetermined period of time on the basis of a plurality of stored operational states (405).

2. Method (200) according to claim 1, wherein the key performance indicator is provided (230, 235) in response to a corresponding request (225).

3. Method (200) according to claim 1 or 2, wherein the operational state (405) of the machine is determined on the basis of a plurality of acquired parameters.

4. Method (200) according to one of the previous claims, wherein the key performance indicator comprises the number of period hours (PH) the machine was running within the predetermined period of time.

5. Method (200) according to one of the previous claims, wherein the key performance indicator comprises the number of service hours (SH) the machine was running within the predetermined period of time.

6. Method (200) according to one of the previous claims, wherein the key performance indicator comprises the number of reserve shutdown (RSH) hours of the machine within the predetermined period of time.

7. Method (200) according to one of the previous claims, wherein the key performance indicator comprises the number of forced outage hours (FOH) of the machine within the predetermined period of time.

8. Method (200) according to one of the previous claims, wherein the key performance indicator comprises the number of planned outage hours (POH) of the machine within the predetermined period of time.

9. Method (200) according to one of the previous claims, wherein the key performance indicator comprises an availability factor (AF) of the machine within the predetermined period of time.

10. Method (200) according to one of the previous claims, wherein the key performance indicator comprises a reliability factor (RF) of the machine within the predetermined period of time.

11. Method (200) according to one of the previous claims, wherein the key performance indicator comprises a service factor (SF) for the machine within the predetermined period of time.

12. Method (200) according to one of the previous claims, wherein the key performance indicator comprises a mean time between failures (MTBF) of the machine within the predetermined period of time.

13. Method (200) according to one of the previous claims, wherein the process (105) is controlled on the basis of the key performance indicator.

14. System (100) for processing data (150) concerning an industrial process (105), the system comprising:

- a computing platform (180);
- the computing platform (180) having a data interface that is connectable, via a wide area data network, to a physical entity (160);
- wherein the physical entity (160) is adapted to provide an acquisition of a parameter that is related to operation of a machine involved in said process (105);
- wherein the platform (180) is adapted to carry out a method (200) according to one of the above claims.

15. System (100) according to claim 14, wherein the physical entity comprises a data acquisition unit (160) located in a domain where the process (105) is carried out, the data acquisition unit (160) comprising at least one interface (175) connectable to a sensor (155) that is adapted to acquire said parameter.

# FIG 1

# FIG 2

200

205

210

215

220

225

230

235

# FIG 3

300
305

PH
AH
UH
NDH
SH
RSH
FOH
POH
OH

310

315  320  325  330  335  340  345  350  355

POH   SH   FOH   RSH

FIG 4

400

105

405

420  415  425

410

| | 26    M | 27    D | 28    M |
|---|---|---|---|
| | | | |
| 08$^{00}$ | | | |
| 09$^{00}$ | PO | | |
| 10$^{00}$ | | | PO |
| 11$^{00}$ | | PO | |

Europäisches
Patentamt
European
Patent Office
Office européen
des brevets

# EUROPEAN SEARCH REPORT

**Application Number**

EP 18 15 1446

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/053979 A1 (NALAWADE ABHAY [IN]) 1 March 2012 (2012-03-01) * the whole document * | 1-15 | INV. G05B19/406 |
| X | US 2017/357240 A1 (STEWART GREGORY E [CA] ET AL) 14 December 2017 (2017-12-14) * paragraphs [0001] - [0005], [0025] * | 1-15 | |
| X | US 2015/142154 A1 (TIANO MATITIAHU [IL]) 21 May 2015 (2015-05-21) * paragraphs [0001], [0110] - [0113], [0121], [0384], [0389] - [0394] * | 1-15 | |
| X | US 2017/082985 A1 (KOZLOSKI JAMES ROBERT [US] ET AL) 23 March 2017 (2017-03-23) * paragraphs [0001] - [0004], [0038] - [0039] * | 1,14 | |

**TECHNICAL FIELDS SEARCHED (IPC)**

G05B

The present search report has been drawn up for all claims

| Place of search | Date of completion of the search | Examiner |
|---|---|---|
| The Hague | 11 July 2018 | José Luis Meseguer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 15 1446

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2018

| Patent document cited in search report | | Publication date | Patent family member(s) | | Publication date |
|---|---|---|---|---|---|
| US 2012053979 | A1 | 01-03-2012 | DE 112010001881 T5<br>US 2012053979 A1<br>WO 2010128520 A2 | | 03-01-2013<br>01-03-2012<br>11-11-2010 |
| US 2017357240 | A1 | 14-12-2017 | US 2017357240 A1<br>WO 2017218258 A1 | | 14-12-2017<br>21-12-2017 |
| US 2015142154 | A1 | 21-05-2015 | CA 2878012 A1<br>CN 104781740 A<br>EP 2872955 A1<br>US 2015142154 A1<br>WO 2014009942 A1 | | 16-01-2014<br>15-07-2015<br>20-05-2015<br>21-05-2015<br>16-01-2014 |
| US 2017082985 | A1 | 23-03-2017 | NONE | | |

EPO FORM P0459

For more details about this annex : see Official Journal of the European Patent Office, No. 12/82